(19) 

Europäisches Patentamt
European Patent Office
Office européen des brevets

(11) **EP 1 548 351 B1**

(12) **EUROPÄISCHE PATENTSCHRIFT**

(45) Veröffentlichungstag und Bekanntmachung des Hinweises auf die Patenterteilung:
**13.04.2011 Patentblatt 2011/15**

(51) Int Cl.:
***F16P 3/14*** *(2006.01)*

(21) Anmeldenummer: **04029036.3**

(22) Anmeldetag: **08.12.2004**

(54) **Vorrichtung zur Überwachung eines Erfassungsbereichs an einem Arbeitsmittel**

Device for monitoring an area at a machine

Dispositif de surveillance d'une zone de couverture près d'une machine

(84) Benannte Vertragsstaaten:
**AT CH DE LI**

(30) Priorität: **23.12.2003 DE 10360789**

(43) Veröffentlichungstag der Anmeldung:
**29.06.2005 Patentblatt 2005/26**

(73) Patentinhaber: **Leuze electronic GmbH + Co. KG**
**73277 Owen/Teck (DE)**

(72) Erfinder: **Lohmann, Lutz, Dr.**
**82140 Olching (DE)**

(74) Vertreter: **Ruckh, Rainer Gerhard**
**Fabrikstrasse 18**
**73277 Owen/Teck (DE)**

(56) Entgegenhaltungen:
**EP-A- 1 065 522        EP-A- 1 089 030**
**DE-A- 19 757 595       DE-A1- 19 717 299**
**GB-A- 2 207 999        US-A1- 2001 041 077**
**US-A- 2004 070 751**

• **PATENT ABSTRACTS OF JAPAN Bd. 1996, Nr. 11, 29. November 1996 (1996-11-29) -& JP 08 191501 A (NIPPON PIKUSHISU:KK), 23. Juli 1996 (1996-07-23)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zur Überwachung eines Erfassungsbereichs an einem Arbeitsmittel.

Derartige Arbeitsmittel bilden generell Systeme wie Maschinen, Anlagen oder Fahrzeuge, von welchen durch Arbeitsbewegungen Gefährdungen für Personen innerhalb eines Gefahrenbereichs ausgehen können. Vorrichtungen der eingangs genannten Art dienen zur Absicherung derartiger Gefahrenbereiche, in dem mittels einer derartigen Vorrichtung das Eindringen von Objekten in einen Erfassungsbereich, welcher den jeweiligen Gefahrenbereich möglichst vollständig abdeckt, erfasst wird. Insbesondere dienen derartige Vorrichtungen zur Sicherung von Maschinen wie zum Beispiel Abkantpressen, Schneidmaschinen oder Stanzmaschinen. Diese Maschinen weisen ein erstes Maschinenteil auf, welches Arbeitsbewegungen gegen ein zweites Maschinenteil ausführt. Bei einer Abkantpresse besteht das erste Maschinenteil aus einem Oberwerkzeug, welches in vertikaler Richtung auf ein das zweite Maschinenteil bildende Unterwerkzeug zubewegt werden kann, um einen Abkantvorgang auszuführen.

Um Gefährdungen von Personen auszuschließen, muss das Vorfeld vor dem Oberwerkzeug oder generell vor dem ersten Maschinenteil überwacht werden, um bei einem Eingriff einer Person in diesen Gefahrenbereich die Maschine sofort anzuhalten.

Aus der DE 197 172 99 A1 ist eine Schutzeinrichtung zur Überwachung eines derartigen Gefahrenbereichs bekannt.

Diese Schutzeinrichtung weist eine optische Sensoranordnung auf, welche von einer Lichtschranke oder einer Lichtschrankenanordnung gebildet ist, die mit dem ersten Maschinenteil mitbewegt wird. Die öder jede Lichtschranke weist einen Sendelichtstrahlen emittierenden Sender und einen zugeordneten Empfänger auf, welche an gegenüberliegenden Rändern des ersten Maschinenteils befestigt werden. Die von dem oder jedem Sender emittierten Sendelichtstrahlen verlaufen parallel zur längs einer Geraden verlaufenden Unterkante des ersten Maschinenteils und treffen bei freiem Schutzbereich ungehindert auf den zugeordneten Empfänger. Bei einem Objekteingriff in den Schutzbereich wird wenigstens der Strahlengang einer Lichtschranke unterbrochen, worauf die von dem ersten Maschinenteil durchgeführte Arbeitsbewegung unterbrochen wird.

Damit der mit der Lichtschranke oder der Lichtschrankenanordnung erfasste Schutzbereich den Gefahrenbereich der Maschine möglichst vollständig abdeckt, ist Empfangssignal erforderlich, dass die Sendelichtstrahlen der oder jeder Lichtschranke in einem bestimmten Sicherheitsabstand zur Unterkante des ersten Maschinenteils verlaufen. Zur Einstellung dieses Sicherheitsabstandes ist eine weitere Lichtschranke vorgesehen, deren Sendelichtstrahlen auf der Höhe der Unterkante des ersten Maschinenteils verlaufen. Während eines Justiervorganges wird die optische Sensoranordnung am ersten Maschinenteil so lange verschoben, bis eine Strahlunterbrechung an der für die Justage vorgesehenen Lichtschranke registriert wird. Danach wird die Sensoranordnung geringfügig wieder in entgegengesetzter Richtung bewegt, bis die Strahlunterbrechung an dieser Lichtschranke gerade wieder aufgehoben ist.

Nachteilig bei dieser Schutzeinrichtung ist zum einen, dass mit dieser ein Gefahrenbereich nur punktuell entlang der Strahlachsen der Sendelichtstrahlen der Lichtschranken überwacht werden kann. Dies ist insbesondere dann problematisch, wenn zur Gewährleistung eines ausreichenden Personenschutzes auch kleine Objektgrößen, wie zum Beispiel Finger einer Hand oder dergleichen delektiert werden müssen. Weiterhin ist nachteilig, dass Zur Überwachung des gewünschten Gefahrenbereichs die Lichtschranken in einem Justiervorgang auf einen Sicherheitsabstand zu dem ersten Maschinenteil eingestellt werden müssen, was umständlich und zeitaufwendig ist.

Schließlich ist nachteilig, dass diese Schutzeinrichtung bei als Abkantpressen ausgebildeten Maschinen, mittels derer durch Abkanten dreidimensionale Werkstücke hergestellt werden, nicht oder nur in eingeschränktem Umfang einsetzbar ist. Dies beruht darauf, dass bei der Abkantung eines derartigen Werkstücks eine Werkstückseite den Strahlengang der Lichtschranken der Schutzeinrichtung blockieren kann, so dass in diesem Fall keine Objektdetektion mehr möglich ist.

Die EP-A-1065 522 betrifft ein optoelektronisches Überwachungssystem zur Erfassung eines zu überwachenden Raumbereichs, mit mindestens einem Bildgeber, der ein aus einer Anzahl von Bildpunkten enthaltendes Bild erzeugt. Weiterhin umfasst das Überwachungssystem eine Beleuchtungseinrichtung, die Lichtimpulse aussendet, und eine Zeitmesseinheit, welche die Laufzeit der Lichtimpulse von der Aussendung durch die Beleuchtungseinrichtung bis zum Empfang durch den Bildgeber für mindestens einen Bildpunkt ermittelt und mit einem Referenzwert vergleicht. Dabei ist der Pulsbetrieb der Beleuchtungseinrichtung mit dem Bildgeber synchronisiert.

In der EP-A-1 089 030 wird ein Verfahren zum Überwachen eines Schutzbereichs beschrieben, bei dem zumindest ein Lichtsignal durch den Schutzbereich hindurch in Richtung eines den Schutzbereich zumindest bereichsweise begrenzenden Begrenzungselement ausgesandt wird. Das Lichtsignal wird von dem Begrenzungselement zu einem Lichtempfänger reflektiert oder remittiert und die Lichtlaufzeit vom Aussenden bis zum Empfangen des Lichtsignals wird ermittelt, wobei ein Unterbrechungssignal erzeugt wird, wenn die ermittelte Lichtlaufzeit von einer vorbestimmten Maximal-Lichtlaufzeit zumindest um einen vorgegebenen Schwellenwert abweicht. Die ermittelte Lichtlaufzeit wird mit zumindest einer weiteren, von der Maximal-Lichtlaufzeit verschiedenen, zulässigen Lichtlaufzeit verglichen und es wird kein Unterbrechungssignal erzeugt, wenn die ermittelte Lichtlaufzeit innerhalb eines vorgegebenen Toleranzbereichs um die zulässige Lichtlaufzeit liegt.

Der Erfindung liegt die Aufgabe zugrunde, ein System zu schaffen, welches eine möglichst vollständige und sichere Überwachung von Gefahrenbereichen an Arbeitsmitteln gewährleistet.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung dient zur Überwachung eines Erfassungsbereichs an einem Arbeitsmittel. Diese Vorrichtung weist eine Lichtstrahlen emittierende Beleuchtungseinheit zur Beleuchtung des Erfassungsbereichs auf. Ebenso beinhaltet die erfindungsgemäße Vorrichtung eine Kamera zur Ermittlung zweidimensionaler Bilder des Erfassungsbereichs. Die Kamera weist eine linienförmige Anordnung von Empfangselementen auf, deren Ausgangssignale in einer Auswerteeinheit ausgewertet werden. Für jedes Empfangselement wird ein Distanzwert aus der Lichtlaufzeit der von der Beleuchtungseinheit emittierten und aus dem Erfassungsbereich zurückreflektierten Lichtstrahlen ermittelt. Mit der Auswerteeinheit wird wenigstens ein auf das Arbeitsmittel geführter Schaltausgang angesteuert, so dass das Arbeitsmittel nur darin in Betrieb gesetzt ist, falls sich kein Objekt im Erfassungsbereich befindet.

Für den Einsatz im Bereich des Personenschutzes und zur Erfüllung des dort geforderten Sicherheitsniveaus ist die Sensoreinheit der erfindungsgemäßen Vorrichtung selbstsicher ausgeführt, in dem in der Sensoreinheit eine Eigenfehlerkontrolle durchgeführt wird. Vorteilhaft hierbei ist, dass die Sensoreinheit hierbei einen einkanaligen Aufbau aufweist. Demgegenüber weist die der Sensoreinheit nachgeordnete Auswerteeinheit bevorzugt einen zweikanaligen Aufbau auf.

Ein wesentlicher Vorteil der erfindungsgemäßen Vorrichtung besteht darin, dass mit der Kamera durch Auswertung der Ausgangssignale der Empfangselemente nicht nur eine Anwesenheitskontrolle von Objekten durchführbar ist, sondern durch die durchgeführten Distanzmessungen zusätzlich eine Tiefeninformation erhalten wird. Damit wird ein zweidimensionales Bild von Objekten innerhalb des Erfassungsbereichs erhalten. Dabei ist besonders vorteilhaft, dass eine Objekterfassung innerhalb des Erfassungsbereichs ohne Durchführung eines Referenzbildvergleichs durchgeführt werden kann. Insbesondere können auch Objekte vor einem Hintergrund sicher erfasst weiden, wobei die Objektdetektion weitgehend unabhängig von Umgebungseinflüssen wie der Beschaffenheit des Hintergrunds oder Fremdlichteinstrahlungen ist.

Die erfindungsgemäße Vorrichtung kann insbesondere zur Gefahrenbereichsüberwachung an Maschinen eingesetzt werden, bei welchen ein erstes Maschinenteil Arbeitsbewegungen gegen ein zweites Maschinenteil ausführt. Derartige Maschinen können insbesondere als Schneidmaschinen oder als Stanzmaschinen ausgebildet sein. Weiterhin können derartige Maschinen als Abkantpressen ausgebildet sein, wobei das erste Maschinenteil von einem Oberwerkzeug gebildet ist, welches gegenüber einem das zweite Maschinenteil bildenden stationären Unterwerkzeug verfahrbar ist. Vorteilhaft hierbei ist, dass durch Anbringung der erfindungsgemäßen Vorrichtung im Bereich des ersten Maschinenteils, im Fall einer Abkantpresse im Bereich des Oberwerkzeugs, der gesamte Gefahrenbereich bis zum Unterwerkzeug überwacht werden kann. Besonders vorteilhaft hierbei ist, dass dabei Bewegungen von zu bearbeitenden Werkstücken nicht zu einer Blockierung des Strahlengangs der Lichtstrahlen der erfindungsgemäßen Vorrichtung führen, so dass auch bei Führen von Werkstücken im Gefahrenbereich eine Objekterfassung mittels der Vorrichtung innerhalb des Erfassungsbereichs gewährleistet ist.

Zum Schutz von Personen und Gegenständen wird mittels der erfindungsgemäßen Vorrichtung das Arbeitsmittel außer Betrieb gesetzt, wenn ein Objekteingriff im Überwachungsbereich registriert wird. Im einfachsten Fall erfolgt die Deaktivierung des Arbeitsmittels dann, wenn ein beliebiges Objekt in den Erfassungsbereich eindringt.

In einer vorteilhaften Ausführungsform der Erfindung erfolgt eine Unterscheidung von sicherheitskritischen Objekten und nicht sicherheitskritischen Objekten. Nicht sicherheitskritische Objekte können beispielsweise von zu bearbeitenden Werkstücken, Maschinenteilen, stationären Gebäudeteilen und dergleichen gebildet sein. Derartige nicht sicherheitskritische Objekte führen generell zu keiner Gefährdung für Personen. Damit würde ein durch die Detektion derartiger nicht sicherheitskritischer Objekte bewirktes Deaktivieren des Arbeitsmittels eine unnötige Stillstandszeit und damit eine Reduzierung der Verfügbarkeit des Arbeitsmittels bedeuten.

Zweckmäßigerweise werden die Konturen und gegebenenfalls auch die Bahnen derartiger nicht sicherheitskritischer Objekte in einem Einlernvorgang eingelernt. Dann werden während der an den Einlernvorgang anschließenden Betriebsphase sämtliche Objekte, die nicht den eingelernten nicht sicherheitskritischen Objekte entsprechen, als sicherheitskritische Objekte klassifiziert, so dass deren Erfassung innerhalb des Erfassungsbereichs zu einem Deaktivieren des Arbeitsmittels führt. Damit wird ein Höchstmaß an Sicherheit bei der Überwachung des Erfassungsbereichs gewährleistet, da nur die zuvor eingelernten nicht sicherheitskritischen Objekte bei Eindringen in den Erfassungsbereich nicht zu einer Deaktivierung des Arbeitsmittels führen.

Generell kann eine Deaktivierung des Arbeitsmittels über die erfindungsgemäße Vorrichtung erfolgen, wenn ein Objekt oder speziell ein sicherheitskritisches Objekt innerhalb des gesamten Erfassungsbereichs detektiert wird.

Alternativ können auch innerhalb des Erfassungsbereichs Schutzzonen und nicht sicherheitskritische Bereiche definiert werden, wobei nur Objekterfassungen in den nicht sicherheitskritischen Bereichen nicht zur Deaktivierung des Arbeitsmittels führen. Durch ein derartiges Ausblenden von Bereichen wird die Verfügbarkeit des Arbeitsmittels erhöht, da unnötige Stillstandszeiten infolge von Abschaltbefehlen aufgrund von Objektdetektionen in diesen Bereichen vermieden werden.

Die Erfindung wird im Nachstehenden anhand der Zeichnungen erläutert. Es zeigen:

Figur 1:   Schematische Darstellung der optischen Komponenten einer Vor- richtung zur Erfassung von Objekten.

Figur 2:   Blockschaltbild der Vorrichtung gemäß Figur 1.

Figur 3:   Zeitdiagramme zur Distanzbestimmung nach dem Puls-Laufzeit- Verfahren für die Vorrichtung gemäß Figur 1.

Figur 4:   Anordnung einer Vorrichtung gemäß den Figuren 1 und 2 an einer Abkantpresse.

a) Querschnitt durch die Abkantpresse
b) Draufsicht auf die Abkantpresse ohne zu bearbeitendes Werkstück
c) Draufsicht auf die Abkantpresse mit zu bearbeitendes Werkstück

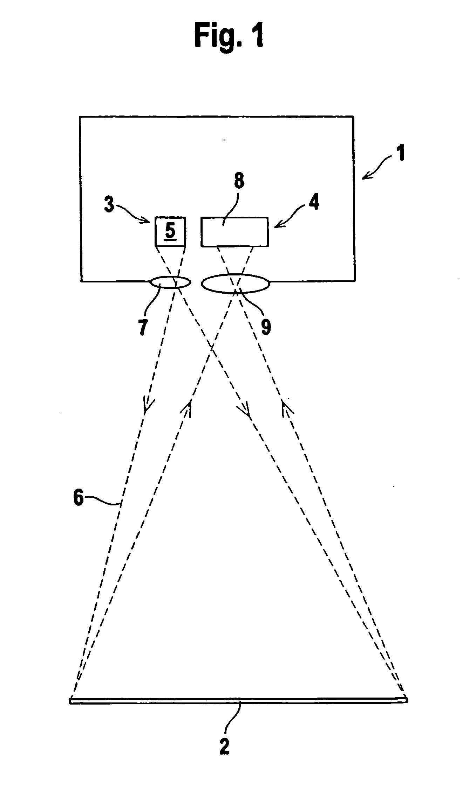

Figur 1 zeigt schematisch die optischen Komponenten einer Vorrichtung 1 zur Überwachung eines Erfassungsbereichs 2 an einem Arbeitsmittel. Das in Figur 1 nicht dargestellte Arbeitsmittel ist von einer Maschine, einer Anlage oder dergleichen gebildet. Durch Arbeitsvorgänge, die mit dem Arbeitsmittel durchgeführt werden, entsteht im Bereich des Arbeitsmittels ein Gefahrenbereich, welcher innerhalb des Erfassungsbereichs 2 von der Vorrichtung 1 überwacht wird.

Die optischen Komponenten der Vorrichtung 1 bilden eine Sensoreinheit bestehend aus einer Beleuchtungseinheit 3 und einer Kamera 4. Die Beleuchtungseinheit 3 weist im vorliegenden Fall einen als Laserdiode ausgebildeten Sender 5 auf, welcher Lichtstrahlen 6 emittiert. Alternativ kann der Sender 5 von einer Leuchtdiode gebildet sein. Weiterhin kann die Beleuchtungseinheit 3 auch Anordnungen von mehreren Laserdioden oder Leuchtdioden aufweisen. Die Beleuchtungseinheit 3 weist als weitere Komponente eine dem Sender 5 nachgeordnete Sendeoptik 7 auf. Mit der Sendeoptik 7 erfolgt eine Strahlformung der Lichtstrahlen 6 derart, dass mit den Lichtstrahlen 6 der zu überwachende Erfassungsbereich 2 komplett ausgeleuchtet wird.

Die Kamera 4 weist eine lineare Anordnung von Empfangselementen auf. Im vorliegenden Fall weist die Kamera 4 einen CMOS-Chip 8 mit einer linearen Anordnung von Empfangselementen auf. Alternativ kann die Kamera 4 einen entsprechenden CCD-Chip aufweisen.

Die Kamera 4 weist weiterhin eine dem CMOS-Chip 8 vorgeordnete Empfangsoptik 9 auf. Mittels der Empfangsoptik 9 werden die aus dem Erfassungsbereich 2 zurückreflektierten Lichtstrahlen 6 auf die Empfangselemente des CMOS-Chips 8 fokussiert.

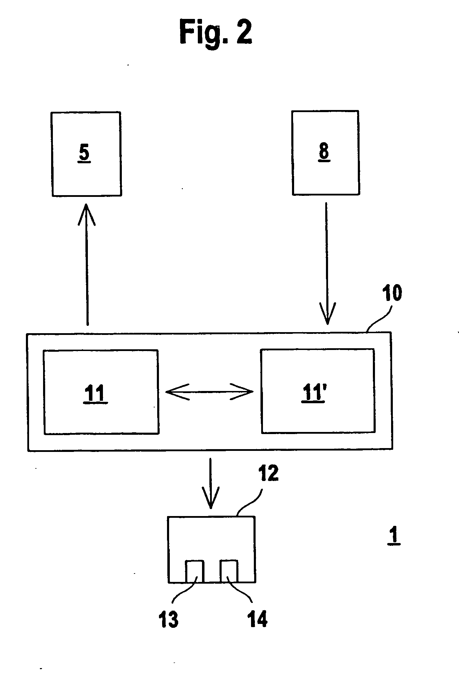

Figur 2 zeigt ein Blockschaltbild der Vorrichtung 1 gemäß Figur 1. Der Sender 5 der Beleuchtungseinheit 3 und die Kamera 4 sind an eine zweikanalige Auswerteeinheit 10 angeschlossen, die im vorliegenden Fall von zwei identischen sich gegenseitig überwachenden Rechnereinheiten 11, 11' gebildet ist.

Mit der Auswerteeinheit 10 wird einerseits die Beleuchtungseinheit 3 angesteuert. Andererseits erfolgt in der Auswerteeinheit 10 die Auswertung der Ausgangssignale der Empfangselemente der Kamera 4. Dabei werden zur Ermittlung zweidimensionaler Bilder des Erfassungsbereichs 2 beziehungsweise von im Erfassungsbereich 2 angeordneten Objekten für sämtliche Empfangselemente fortlaufend jeweils Distanzwerte aus der Lichtlaufzeit der von der Beleuchtungseinheit 3 emittierten und aus dem Erfassungsbereich 2 zurückreflektierten Lichtstrahlen 6 ermittelt.

An die Auswerteeinheit 10 ist eine Ausgangsschaltung 12 mit einem Schaltausgang 13 und einem Warnausgang 14 angeschlossen.

In der Auswerteeinheit 10 wird in Abhängigkeit der Auswertung der Ausgangssignale der Empfangselemente ein binäres Schaltsignal generiert und über den Schaltausgang 13 ausgegeben, mittels dessen das Arbeitsmittel aktivierbar oder deaktivierbar ist. Bei der Detektion eines Objekteingriffs im Erfassungsbereich 2 wird ein Schaltzustand des Schaltsignals generiert, der zur Deaktivierung, das heißt zum Außerbetriebsetzen des Arbeitsmittels führt. Weiterhin wird in der Auswerteeinheit 10 bei Bedarf ein Warnsignal generiert, welches über den Warnausgang 14 ausgebbar ist.

Gemäß einer ersten Variante erfolgt die Distanzmessung mit der Sensoreinheit nach einem Phasenmessverfahren. Zur Durchführung der Phasenmessung ist den Lichtstrahlen 6 des Senders 5 eine Amplitudenmodulation mit einer vorgegebenen Modulationsfrequenz aufgeprägt. Zur Erhöhung des Eindeutigkeitsbereichs der Phasenmessung und damit des erfassbaren Distanzbereichs können den Lichtstrahlen auch mehrere Amplitudenmodulationen mit unterschiedlichen Modulationsfrequenzen aufgeprägt sein. Bei der Phasenmessung wird für jedes Empfangselement des CMOS-Chips 8 die Phasendifferenz der dort auftreffenden, aus dem Erfassungsbereich 2 zurückreflektierten Lichtstrahlen 6 bezüglich der vom Sender 5 emittierten Lichtstrahlen 6 ermittelt. Aus diesen Phasendifferenzen werden in der Auswerteeinheit 10 jeweils Distanzwerte berechnet. Aus der Gesamtheit des für die Empfangselemente ermittelten Distanzwerte werden dreidimensionale Bilder von den Objekten im Überwachungsbereich erhalten.

Gemäß einer zweiten Variante erfolgt die Distanzmessung mit der Sensoreinheit nach einem Puls-Laufzeit-Verfahren. In diesem Fall emittiert der Sender 5 Lichtstrahlen 6 in Form von Lichtimpulsen. Zur Distanzbestimmung wird dabei für jedes Empfangseleinent die Laufzeit jeweils eines Lichtimpulses vom Sender 5 zum Erfassungsbereich 2 und zurück zur Kamera 4 ausgewertet. Aus der Gesamtheit aller Distanzwerte für die einzelnen Empfangselemente werden dann wieder dreidimensionale Bilder von Objekten innerhalb des Erfassungsbereichs 2 erhalten.

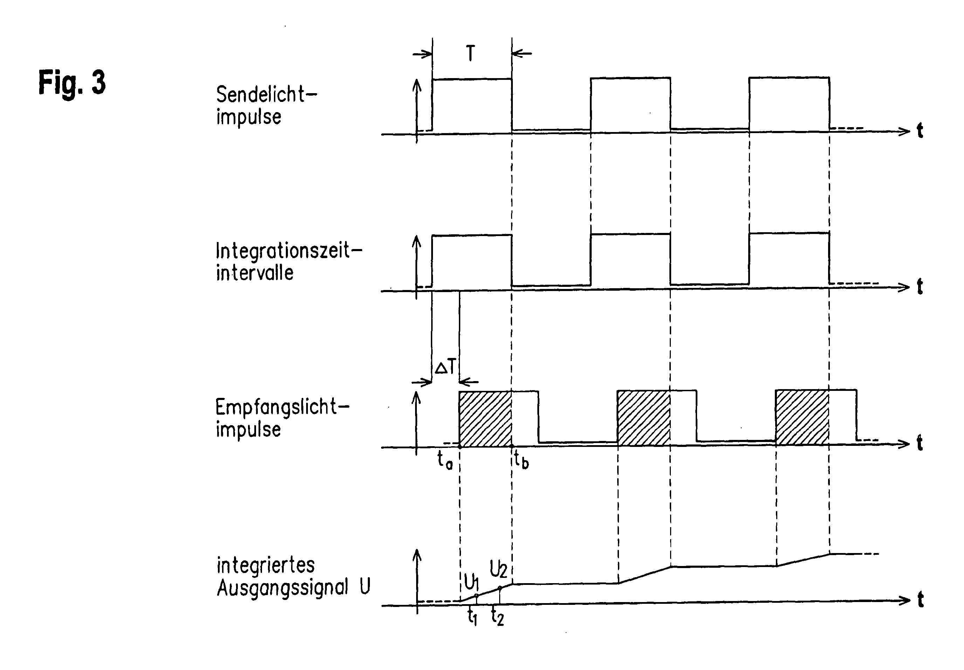

Figur 3 zeigt schematisch das Prinzip der Distanzmessung nach einem Puls-Laufzeit-Verfahren. Das erste Diagramm in Figur 3 zeigt die Folge der vom Sender 5 emittierten Lichtimpulse, in Figur 3 als Sendelichtimpulse bezeichnet. Die Sendelichtimpulse weisen jeweils dieselbe Pulsdauer T auf. Auch die Pulspausen zwischen zwei Sendelichtimpulsen sind konstant. Das dritte Diagramm in Figur 3 zeigt die vom Sender 5 emittierten und von einem Objekt im Abstand d zur Vorrichtung 1 auf ein Empfangselement zurückreflektierten Lichtimpulse, in Figur 3 als Empfangslichtimpulse bezeichnet. Entsprechend der Lichtlaufzeit eines Lichtimpulses vom Sender 5 zum Objekt und zurück zum Empfangselement ist jeder Empfangslichtimpuls gegenüber dem zugehörigen Sendelichtimpuls um die Zeitdauer $\Delta T$ = 2d/c verzögert. Dabei ist d die Distanz des Objekts zur Vorrichtung 1 und c die Lichtgeschwindigkeit. Zur Distanzbestimmung kann die Zeitdauer $\Delta T$ prinzipiell durch ein Zählverfahren ermittelt werden. Dabei wird mit der Emission eines Sendelichtimpulses, vorzugsweise mit dessen steigender Flanke, ein durch einen Oszillator gesteuerter Zähler gestartet. Mit dem Empfang des zugehörigen Empfangslichtimpulses, vorzugsweise mit deren steigender Flanke, wird der Zähler gestoppt.

Im vorliegenden Fall wird die Zeitdauer $\Delta T$ mittels eines Integrationsverfahrens bestimmt. Das zweite Diagramm in Figur 3 zeigt Folgen von Integrationsintervallen, während derer das durch den jeweiligen Empfangslichtimpuls am Empfangselement generierte Ausgangssignal aufintegriert wird. Wie aus Figur 3 ersichtlich erstrecken sich die einzelnen Integrationsintervalle jeweils über die Dauer eines Sendelichtimpulses, das heißt das Ausgangssignal am Empfangselement wird jeweils nur während der Emission eines Sendelichtimpulses integriert. Da jeder Empfangslichtimpuls bezüglich des zugehörigen Sendelichtimpulses um $\Delta T$ verzögert ist, fällt jeweils nur ein Teil des Empfangslichtimpulses in das entsprechende Integrationsintervall. Dementsprechend wird beispielsweise für den ersten Empfangslichtimpuls das Ausgangssignal nur während des Zeitintervalls zwischen $t_a$ und $t_b$ aufintegriert.

Das so erhaltene integrierte Ausgangssignal U ist im vierten Diagramm von Figur 3 dargestellt.

Zür Ermittlung von $\Delta T$ werden innerhalb jedes Integrationsintervalls zwei Messpunkte des integrierten Ausgangssignals ausgewählt. Die Lage der Messpunkte wird dabei so gewählt, dass diese in einem Zeitintervall liegen, innerhalb dessen gerade der Empfangslichtimpuls auf das Empfangselement auftrifft.

Für das erste Integrationsintervall werden die Messpunkte $U_1$, $U_2$ zu den Zeiten $t_1$, $t_2$ gewählt. Aus diesen Messpunkten wird $\Delta T$ gemäß folgender Beziehung ermittelt:

$$\Delta T = (U_2\, t_1 - U_1\, t_2) / (U_2 - U_1)$$

Anhand der für die einzelnen Empfangselemente der Kamera 4 durchgeführten Distanzmessungen werden zweidimensionale Bilder von Objekten erhalten, anhand derer insbesondere Objekte auch vor Hintergrundflächen beliebiger Oberflächenbeschaffenheit detektiert werden können.

Für den Einsatz der Vorrichtung 1 im Bereich des Personenschutzes muss diese den Anforderungen des entsprechenden Sicherheitsniveaus genügen. Hierzu weist die Auswerteeinheit 10 einen redundanten, zweikanaligen Aufbau mit zwei sich gegenseitig überwachenden Rechnereinheiten 11, 11' auf.

Die Sensoreinheit, insbesondere die Kamera 4 weist einen einkanaligen Aufbau auf. Zur Erzielung des geforderten Sicherheitsniveaus wird für die Sensoreinheit eine Eigenfehlerkontrolle durchgeführt, so dass diese selbstsicher ist.

Für den Fall, dass die Distanzmessung bei der Vorrichtung 1 nach einem Puls-Laufzeit-Verfahren erfolgt, wird zur Durchführung der Eigenfehlerkontrolle in vorgegebenen Zeitabständen die Aussendung eines Sendelichtimpulses verzögert und die dadurch bewirkte Veränderung der Distanzmessung für die einzelnen Empfangselemente in der Auswerteeinheit 10 kontrolliert.

Entsprechend wird für den Fall, dass die Distanzmessung nach einem Phasenmessverfahren erfolgt, die Phase der den Lichtstrahlen 6 aufgeprägten Amplitudenmodulation verschoben und die dadurch bewirkte Veränderung der Distanzmessung für die einzelnen Empfangselemente kontrolliert.

Bei der Objektdetektion mittels der Vorrichtung 1 kann in der Auswerteeinheit 10 generell ein Schaltsignal zur Deaktivierung des Arbeitsmittels generiert werden, wenn ein beliebiges Objekt im Erfassungsbereich 2 registriert wird.

Alternativ können mit der Vorrichtung 1 sicherheitskritische Objekte und nicht sicherheitskritische Objekte unterschieden werden, wobei nur das Eindringen von sicherheitskritischen Objekten in den Erfassungsbereich 2 zur Deaktivierung des Arbeitsmittels führt.

Derartige nicht sicherheitskritische Objekte können beispielsweise von Maschinenteilen, insbesondere Teilen des Arbeitsmittels, Werkstücken, die mittels des Arbeitsmittels bearbeitet werden, oder auch von stationären Teilen wie Gebäudeteilen gebildet sein. Generell führt ein Eingriff derartiger nicht sicherheitskritischer Objekte in den Erfassungsbereich 2 nicht zu einer Gefährdung, insbesondere von Personen.

Um ein unnötiges Außerbetriebsetzen des Arbeitsmittels bei Eindringen eines nicht sicherheitskritischen Objektes in den Erfassungsbereich 2 zu vermeiden, werden während eines Einlernvorgangs die Konturen und gegebenenfalls die Bahnen von nicht sicherheitskritischen Objekten, falls sich diese immer entlang derartiger Bahnen bewegen, erfasst und in der Auswerteeinheit 10 abgespeichert.

Während des nachfolgenden Betriebs der Vorrichtung 1 werden im Erfassungsbereich 2 detektierte Objekte mit den abgespeicherten nicht sicherheitskritischen Objekten beziehungsweise gegebenenfalls deren Bahnen in der Auswerteeinheit 10 verglichen. Wird dabei keine Übereinstimmung eines detektierten Objektes mit einem nicht sicherheitskritischen Objekt festgestellt, wird das detektierte Objekt als sicherheitskritisches Objekt klassifiziert und ein Schaltsignal zur Außerbetriebsetzung des Arbeitsmittels generiert.

Die Vorrichtung 1 kann insbesondere an Maschinen angeordnet sein, bei welchen ein erstes Maschinenteil Arbeitsbewegungen gegen ein zweites Maschinenteil ausführt.

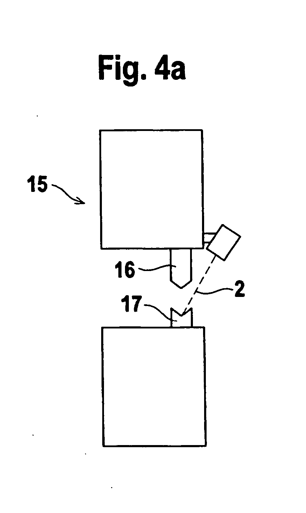

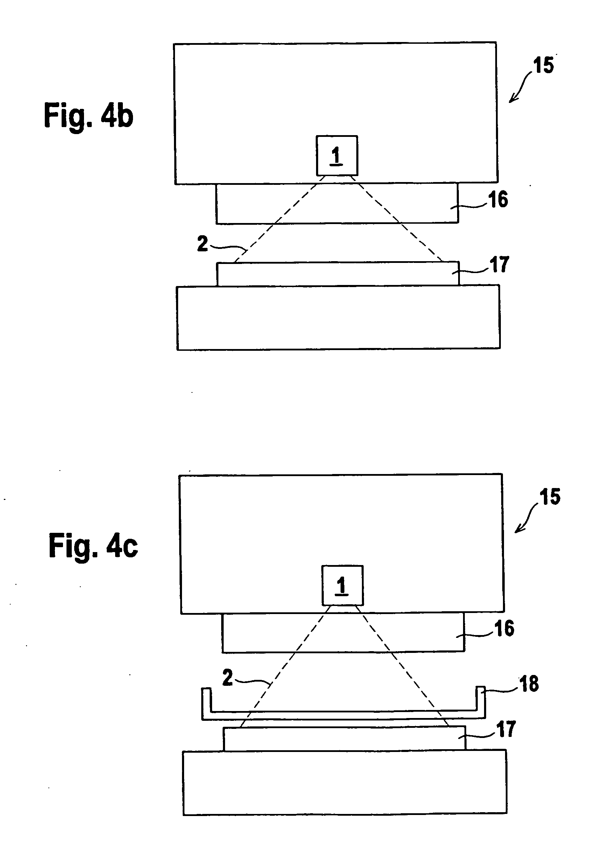

Die Figuren 4a-c zeigen ein Ausführungsbeispiel mit einer als Abkantpresse 15 ausgebildeten Maschine. Die Abkantpresse 15 weist als erstes Maschinenteil ein Oberwerkzeug 16 auf, welches zur Durchführung von Abkantprozessen gegen ein das zweite Maschinenteil bildende Unterwerkzeug 17 in vertikaler Richtung bewegt werden kann. Mit der Abkantpresse 15 werden Werkstücke abgekantet, wobei in Figur 4c ein als Blechteil 18 ausgebildetes Werkstück dargestellt ist. Dabei wird das Blechteil 18 durch das Führen der in horizontaler Richtung verlaufenden Unterkante des Oberwerkzeugs 16 auf das ebenfalls in horizontaler Richtung verlaufende Oberkante des Unterwerkzeugs 17 längs einer Biegelinie abgekantet beziehungsweise gebogen.

Zur Bearbeitung der Werkstücke werden diese üblicherweise von Bedienpersonen in vorgegebenen Positionen zwischen dem Oberwerkzeug 16 und dem Unterwerkzeug 17 eingebracht. Dadurch besteht für die jeweilige Bedienperson die Gefahr von Verletzungen durch Einbringen der Hände oder Finger in den Bereich zwischen Oberwerkzeug 16 und Unterwerkzeug 17.

Zum Schutz der Bedienperson ist an der Abkantpresse 15 die Vorrichtung 1 angebracht, mittels der Gefahrenbereich zwischen dem Oberwerkzeug 16 und Unterwerkzeug 17 überwacht wird.

Dabei ist die Vorrichtung 1 im Bereich des Oberwerkzeugs 16 so angebracht, dass der Erfassungsbereich 2 den gesamten Bereich, der an die Oberseite des Unterwerkzeugs 17 ausschließt, umfasst. Im vorliegenden Fall ist die Vorrichtung 1 an dem das Oberwerkzeug 16 aufnehmenden Rahmen der Abkantpresse 15 befestigt. Alternativ kann die Vorrichtung 1 auch am dem Oberwerkzeug 16 befestigt sein, so dass die Vorrichtung 1 mit dem Oberwerkzeug 16 mitbewegt wird.

Wie aus Figur 4b ersichtlich, ist der Erfassungsbereich 2 durch die Oberkante des Unterwerkzeugs 17 begrenzt. Da mit der Vorrichtung 1 infolge der dort durchgeführten Distanzmessungen zweidimensionale Bilder von Objekten im Erfassungsbereich 2 gebildet werden, können Objekte im Erfassungsbereich 2 sicher von dem von der Oberkante des Unterwerkzeugs 17 gebildeten Hintergrund unterschieden werden.

Figur 4c zeigt die Abkantpresse 15 mit einem zwischen dem Oberwerkzeug 16 und Unterwerkzeug 17 liegenden Blechteil 18, wobei dieses durch zuvor durchgeführte Abkantprozesse seitlich in vertikaler Richtung von einem zu bearbeitenden Bodenteil hervorstehende Wandsegmente aufweist. Bei einer Überwachung mit seitlich an der Abkantpresse 15 angeordneten Lichtschranken würden die in horizontaler Richtung verlaufenden Sendelichtstrahlen der Lichtschranken von diesen Wandsegmenten blockiert, so dass eine Überwachung des Gefahrenbereichs zwischen dem Oberwerkzeug 16 und Unterwerkzeug 17 nicht mehr möglich wäre.

Demgegenüber ist mit der erfindungsgemäßen Vorrichtung 1 auch in diesem Fall eine Überwachung des Gefahrenbereichs möglich, da diese im Bereich des Oberwerkzeugs 16 so angeordnet ist, dass das Sichtfeld der Kamera 4 der Vorrichtung 1 von oben auf das Unterwerkzeug 17 gerichtet ist.

Da das im Gefahrenbereich liegende Blechteil 18 nicht zu einem Ansprechen der Vorrichtung 1 und dadurch bedingt zu einem Außerbetriebsetzen der Abkantpresse 15 führen darf, wird die Kontur des Blechteils 18 als nicht sicherheitskritisches Objekt und zweckmäßigerweise auch dessen Bahnverlauf während des Abkantvorgangs eingelernt und in der Auswerteeinheit 10 abgespeichert.

Während des nachfolgenden Betriebs der Vorrichtung 1 wird von dieser ein Abschaltbefehl für die Abkantpresse 15 generiert, wenn ein sicherheitskritisches Objekt detektiert wird, das heißt wenn ein Objekt detektiert wird, welches nicht mit dem nicht sicherheitskritischen Objekt beziehungsweise dessen eingelernter Bahn übereinstimmt.

Bezugszeichenliste

| (1) | Vorrichtung |
|---|---|
| (2) | Erfassungsbereich |
| (3) | Beleuchtungseinheit |
| (4) | Kamera |
| (5) | Sender |
| (6) | Lichtstrahlen |
| (7) | Sendeoptik |
| (8) | CMOS-Chip |
| (9) | Empfangsoptik |
| (10) | Auswerteeinheit |
| (11, 11') | Rechnereinheit |
| (12) | Ausgangsschaltung |
| (13) | Schaltausgang |
| (14) | Warnausgang |
| (15) | Abkantpresse |

(16)     Oberwerkzeug
(17)     Unterwerkzeug
(18)     Blechteil

c         Lichtgeschwindigkeit
d         Distanz des Objekts zur Vorrichtung
$t_1$, $t_2$, $t_a$, $t_b$     Zeitpunkte
T         Pulsdauer
U         Ausgangssignal
$U_1$, $U_2$     Messpunkte
$\Delta T$         Zeitdauer

**Patentansprüche**

1.  Vorrichtung (1) zur Überwachung eines Erfassungsbereichs (2) an einem Arbeitsmittel, mit einer Lichtstrahlen (6) emittierenden Beleuchtungseinheit (3) zur Beleuchtung des Erfassungsbereichs (2), mit einer Kamera (4) zur Ermittlung zweidimensionaler Bilder des Erfassungsbereichs (2), wobei die Kamera (4) eine linienförmige Anordnung von Empfangselementen aufweist, deren Ausgangssignale in einer Auswerteeinheit (10) ausgewertet werden, wobei für jedes Empfangselement ein Distanzwert aus der Lichtlaufzeit der von der Beleuchtungseinheit (3) emittierten und aus dem Erfassungsbereich (2) zurückreflektierten Lichtstrahlen (6) ermittelt wird, und wobei mit der Auswerteeinheit (10) wenigstens ein auf das Arbeitsmittel geführter Schaltausgang (13) angesteuert wird, so dass das Arbeitsmittel nur dann in Betrieb gesetzt ist, falls sich kein Objekt im Erfassungsbereich (2) befindet, und wobei die von der Beleuchtungseinheit (3) und der Kamera (4) gebildete Sensoreinheit einen einkanaligen Aufbau aufweist **dadurch gekennzeichnet, dass** die Sensoreinheit durch eine Eigenfehlerkontrolle selbstsicher ist, wobei bei einer nach einem Puls-Laufzeit-Verfahren arbeitenden Sensoreinheit zur Eigenfehlerkontrolle die vom Sender (5) emittierten Lichtimpulse um vorgegebene Zeiten verzögert werden und die dadurch veränderten Distanzwerte der Empfangselemente ausgewertet werden, oder bei einer nach dem Phasenmessverfahren arbeitenden Sensoreinheit zur Eigenfehlerkontrolle die Phase der den Lichtstrahlen (6) aufgeprägten Amplitudenmodulation verschoben wird und die dadurch veränderten Distanzwerte der Empfangselemente ausgewertet werden.

2.  Vorrichtung nach Anspruch 1, **dadurch gekennzeichnet, dass** die Kamera (4) einen CCD-Chip oder CMOS-Chip (8) mit einer linearen Anordnung von Empfangselementen aufweist.

3.  Vorrichtung nach einem der Ansprüche 1 oder 2, **dadurch gekennzeichnet, dass** die Beleuchtungseinheit (3) wenigstens einen Lichtstrahlen (6) emittierenden Sender (5) und eine diesem nachgeordnete Sendeoptik (7) aufweist.

4.  Vorrichtung nach Anspruch 3, **dadurch gekennzeichnet, dass** der Sender (5) der Beleuchtungseinheit (3) von einer Leuchtdiode oder einer Laserdiode gebildet ist.

5.  Vorrichtung nach einem der Ansprüche 1 - 4, **dadurch gekennzeichnet, dass** die Ermittlung von Distanzwerten nach einem Puls-Laufzeit-Verfahren erfolgt.

6.  Vorrichtung nach Anspruch 5, **dadurch gekennzeichnet, dass** der Sender (5) Lichtstrahlen (6) in Form von Lichtimpulsen emittiert.

7.  Vorrichtung nach einem der Ansprüche 1 - 4, **dadurch gekennzeichnet, dass** die Ermittlung von Distanzwerten nach einem Phasenmessverfahren erfolgt.

8.  Vorrichtung nach Anspruch 7, **dadurch gekennzeichnet, dass** den vom Sender (5) emittierten Lichtstrahlen (6) eine Amplitudenmodulation mit wenigstens einer vorgegebenen Modulationsfrequenz aufgeprägt ist.

9.  Vorrichtung nach einem der Ansprüche 1 - 8, **dadurch gekennzeichnet, dass** in der Auswerteeinheit (10) eine Unterscheidung von sicherheitskritischen Objekten und nicht sicherheitskritischen Objekten erfolgt, und dass über die Auswerteeinheit (10) das Arbeitsmittel nur dann in Betrieb gesetzt wird, falls sich kein sicherheitskritisches Objekt im Erfassungsbereich (2) befindet.

10. Vorrichtung nach Anspruch 9, **dadurch gekennzeichnet, dass** in einem Einlernvorgang nicht sicherheitskritische Objekte eingelernt und in der Auswerteeinheit (10) abgespeichert werden.

11. Vorrichtung nach Anspruch 10, **dadurch gekennzeichnet, dass** während des Einlernvorgangs Konturen von nicht sicherheitskritischen Objekten eingelernt werden.

12. Vorrichtung nach einem der Ansprüche 10 oder 11, **dadurch gekennzeichnet, dass** während des Einlernvorganges Bahnbewegungen von nicht sicherheitskritischen Objekten eingelernt werden.

13. Vorrichtung nach einem der Ansprüche 1 - 12, **dadurch gekennzeichnet, dass** der Erfassungsbereich (2) in wenigstens eine Schutzzone und in wenigstens einen nicht sicherheitskritischen Bereich unterteilbar ist, wobei nur Objekterfassungen in dem nicht sicherheitskritischen Bereich nicht zu einem Außerbetriebsetzen des Arbeitsmittels führen.

**14.** Vorrichtung nach Anspruch 13, **dadurch gekennzeichnet, dass** wenigstens ein Teil eines nicht sicherheitskritischen Bereichs eine Warnzone (17) bildet, wobei bei einer Objekterfassung in der Warnzone (17) über die Auswerteeinheit (10) ein Warnsignal generiert wird.

**15.** Vorrichtung nach einem der Ansprüche 13 oder 14, **dadurch gekennzeichnet, dass** die nicht sicherheitskritischen Bereiche in Abhängigkeit der Positionen von sicherheitskritischen Objekten oder nicht sicherheitskritischen Objekten innerhalb des Erfassungsbereichs (2) definiert sind.

**16.** Vorrichtung nach einem der Ansprüche 13 oder 14, **dadurch gekennzeichnet, dass** die nicht sicherheitskritischen Bereiche in Abhängigkeit von Signalen externer Sensoren definiert sind.

**17.** Vorrichtung nach einem der Ansprüche 1 - 16, **dadurch gekennzeichnet, dass** die Auswerteeinheit (10) einen zweikanaligen Aufbau aufweist.

**18.** Vorrichtung nach Anspruch 17, **dadurch gekennzeichnet, dass** die Auswerteeinheit (10) zwei sich gegenseitig kontrollierende Rechnereinheiten (11, 11') aufweist.

**19.** Vorrichtung nach einem der Ansprüche 1 - 18, **dadurch gekennzeichnet, dass** das Arbeitsmittel von einer Maschine gebildet ist, bei welcher ein erstes Maschinenteil Arbeitsbewegungen gegen ein zweites Maschinenteil ausführt.

**20.** Vorrichtung nach Anspruch 19, **dadurch gekennzeichnet, dass** die Maschine von einer Abkantpresse (15) gebildet ist, wobei das erste Maschinenteil von einem Oberwerkzeug (16) gebildet ist, welches gegenüber einem das zweite Maschinenteil bildenden, stationären Unterwerkzeug (17) verfahrbar ist.

**21.** Vorrichtung nach Anspruch 20, **dadurch gekennzeichnet, dass** der Erfassungsbereich (2) von der Oberseite des Unterwerkzeugs (17) begrenzt ist.

**22.** Vorrichtung nach einem der Ansprüche 20 oder 21, **dadurch gekennzeichnet, dass** diese stationär an der Abkantpresse (15) angeordnet ist.

**23.** Vorrichtung nach einem der Ansprüche 20 oder 21, **dadurch gekennzeichnet, dass** diese am Oberwerkzeug (16) angeordnet ist.

**Claims**

**1.** Device (1) for monitoring a detection region (2) at an operating means, comprising an illuminating unit (3), which emits light beams (6), for illuminating the detection region (2), a camera (4) for detecting two-dimensional images of the detection region (2), wherein the camera (4) comprises a lineal arrangement of receiving elements, the output signals of which are evaluated in an evaluating unit (10), wherein a distance value is determined from the transit time of the light beams (6) emitted by the illuminating unit (3) and reflected back from the detection region (2) for each receiving unit, and wherein at least one switching output (13) led to the operating means is activated by the evaluating unit (10) so that the operating means is placed in operation only when no object is located in the detection region (2), and wherein the sensor unit formed by the illuminating unit (3) and the camera (4) has a single-channel construction, **characterised in that** the sensor unit is self-safeguarding through an intrinsic error check, wherein in the case of a sensor unit operating according to a pulse transit time method the light pulses emitted by the transmitter (5) are, for the intrinsic error check, delayed by predetermined times and the thereby changed distance values of the receiving elements are evaluated or in the case of a sensor unit operating according to the phase measuring method the phase of the amplitude modulation imposed on the light beams (6) is, for the intrinsic error check, displaced and the thereby changed distance values of the receiving elements are evaluated.

**2.** Device according to claim 1, **characterised in that** the camera (4) comprises a CCD chip or CMOS chip (8) with a linear arrangement of receiving elements.

**3.** Device according to one of claims 1 and 2, **characterised in that** the illuminating unit (3) comprises at least one transmitter (5) emitting light beams (6) and a transmission optical system (7) arranged downstream thereof.

**4.** Device according to claim 3, **characterised in that** the transmitter (5) of the illuminating unit (3) is formed by a light-emitting diode or a laser diode.

**5.** Device according to any one of claims 1 to 4, **characterised in that** the determination of distance values takes place in accordance with a pulse transit time method.

**6.** Device according to claim 5, **characterised in that** the transmitter (5) emits light beams (6) in the form of light pulses.

**7.** Device according to any one of claims 1 to 4, **char-**

**acterised in that** the determination of distance values is carried out according to a phase measuring method.

8. Device according to claim 7, **characterised in that** an amplitude modulation with at least one predetermined modulation frequency is imposed on the light beams (6) emitted by the transmitter (5).

9. Device according to any one of claims 1 to 8, **characterised in that** a distinction between safety-critical objects and non-safety-critical objects is carried out in the evaluating unit (10) and that the operating means is placed in operation by way of the evaluating unit (10) only if no safety-critical object is located in the detection region (2).

10. Device according to claim 9, **characterised in that** non-safety-critical objects are learnt in a learning process and are stored in the evaluating unit (10).

11. Device according to claim 10, **characterised in that** contours of non-safety-critical objects are learnt during the learning process.

12. Device according to one of claims 10 and 11, **characterised in that** track movements of non-safety-critical objects are learnt during the learning process.

13. Device according to any one of claims 1 to 12, **characterised in that** the detection region (2) is subdivisible into at least one protection zone and at least one non-safety-critical region, wherein only detections of objects in the non-safety-critical region do not lead to the operating means being taken out of operation.

14. Device according to claim 13, **characterised in that** at least a part of a non-safety-critical region forms a warning zone (17), wherein in the case of object detection in the warning zone (17) a warning signal is generated by way of the evaluating unit (10).

15. Device according to one of claims 13 and 14, **characterised in that** the non-safety-critical regions are defined in dependence on the positions of safety-critical objects or non-safety-critical objects within the detection region (2).

16. Device according to one of claims 13 and 14, **characterised in that** the non-safety-critical regions are defined in dependence on signals of external sensors.

17. Device according to any one of claims 1 to 16, **characterised in that** the evaluating unit (10) has a two-channel construction.

18. Device according to claim 17, **characterised in that** the evaluating unit (10) comprises two mutually checking computer units (11, 11').

19. Device according to any one of claims 1 to 18, **characterised in that** the operating means is formed by a machine in which a first machine part executes operating movements relative to a second machine part.

20. Device according to claim 19, **characterised in that** the machine is formed by a folding press (15), wherein the first part is formed by an upper tool (16) which is movable relative to a stationary lower tool (17) forming the second machine part.

21. Device according to claim 20, **characterised in that** the detection region (2) is bounded by the upper side of the lower tool (17).

22. Device according to one of claims 20 and 21, **characterised in that** this is arranged in stationary position at the folding press (15).

23. Device according to one of claims 20 and 21, **characterised in that** this is arranged at the upper tool (16).

**Revendications**

1. Dispositif (1) pour surveiller une zone de couverture (2) sur un équipement de travail, comprenant une unité d'éclairage (3) émettant des rayons lumineux (6) pour éclairer la zone de couverture (2), une caméra (4) pour déterminer des images bidimensionnelles de la zone de couverture (2), la caméra (4) présentant un agencement linéaire d'éléments de réception dont les signaux de sortie sont évalués dans une unité d'évaluation (10), une valeur de distance étant déterminée pour chaque élément de réception à partir du temps de parcours de la lumière des rayons lumineux (6) émis par l'unité d'éclairage (3) et réfléchis depuis la zone de couverture (2), et au moins une sortie de commutation (13) amenée à l'équipement de travail étant commandée par l'unité d'évaluation (10) de façon que l'équipement de travail ne puisse être mis en service que si aucun objet ne se trouve dans la zone de couverture (2), et l'unité de détection formée par l'unité d'éclairage (3) et la caméra (4) présentant une structure à un canal, **caractérisé en ce que** l'unité de détection est à sécurité intégrée grâce à un contrôle des défauts intrinsèques, sachant que dans le cas d'une unité de détection fonctionnant selon un procédé basé sur le temps de parcours d'impulsions, pour le contrôle des défauts intrinsèques, les impulsions lumineuses émises par l'émetteur (5) sont retardées de temps prédéfinis et les valeurs de distance par là modifiées des éléments de réception sont évaluées, ou que dans le cas d'une unité de détection fonctionnant selon le procédé de mesure de phase, pour le contrôle des défauts intrinsèques, la phase de la modulation d'amplitude appliquée aux rayons lumineux (6) est décalée et les valeurs de distance par là modifiées des éléments de réception sont évaluées.

2. Dispositif selon la revendication 1, **caractérisé en ce que** la caméra (4) présente une puce CCD ou une puce CMOS (8) avec un agencement linéaire d'éléments de réception.

3. Dispositif selon une des revendications 1 ou 2, **caractérisé en ce que** l'unité d'éclairage (3) présente au moins un émetteur (5) émettant des rayons lumineux (6) et une optique d'émission (7) disposée à la suite de celui-ci.

4. Dispositif selon la revendication 3, **caractérisé en ce que** l'émetteur (5) de l'unité d'éclairage (3) est formé par une diode luminescente ou une diode laser.

5. Dispositif selon une des revendications 1 à 4, **caractérisé en ce que** la détermination des valeurs de distance a lieu selon un procédé basé sur le temps de parcours d'impulsions.

6. Dispositif selon la revendication 5, **caractérisé en ce que** l'émetteur (5) émet des rayons lumineux (6) sous la forme d'impulsions lumineuses.

7. Dispositif selon une des revendications 1 à 4, **caractérisé en ce que** la détermination des valeurs de distance a lieu selon un procédé de mesure de phase.

8. Dispositif selon la revendication 7, **caractérisé en ce qu'**une modulation d'amplitude à au moins une fréquence de modulation prédéfinie est appliquée aux rayons lumineux (6) émis par l'émetteur (5).

9. Dispositif selon une des revendications 1 à 8, **caractérisé en ce qu'**une distinction entre objets critiques pour la sécurité et objets non critiques pour la sécurité est opérée dans l'unité d'évaluation (10), et que l'équipement de travail n'est mis en service par l'unité d'évaluation (10) que dans le cas où aucun objet critique pour la sécurité ne se trouve dans la zone de couverture (2).

10. Dispositif selon la revendication 9, **caractérisé en ce que** des objets non critiques pour la sécurité sont appris lors d'une procédure d'apprentissage et enregistrés dans l'unité d'évaluation (10).

11. Dispositif selon la revendication 10, **caractérisé en ce que** pendant la procédure d'apprentissage, des contours d'objets non critiques pour la sécurité sont appris.

12. Dispositif selon une des revendications 10 ou 11, **caractérisé en ce que** pendant la procédure d'apprentissage, des trajectoires d'objets non critiques pour la sécurité sont apprises.

13. Dispositif selon une des revendications 1 à 12, **caractérisé en ce que** la zone de couverture (2) peut être divisée en au moins une zone de protection et en au moins une zone non critique pour la sécurité, seules des détections d'objets dans la zone non critique pour la sécurité n'entraînant pas une mise hors service de l'équipement de travail.

14. Dispositif selon la revendication 13, **caractérisé en ce qu'**au moins une partie d'une zone non critique pour la sécurité forme une zone d'alerte (17), un signal d'alerte étant généré par l'unité d'évaluation (10) en cas de détection d'un objet dans la zone d'alerte (17).

15. Dispositif selon une des revendications 13 ou 14, **caractérisé en ce que** les zones non critiques pour la sécurité sont définies en fonction des positions d'objets critiques pour la sécurité ou d'objets non critiques pour la sécurité à l'intérieur de la zone de couverture (2).

16. Dispositif selon une des revendications 13 ou 14, **caractérisé en ce que** les zones non critiques pour la sécurité sont définies en fonction de signaux de capteurs externes.

17. Dispositif selon une des revendications 1 à 16, **caractérisé en ce que** l'unité d'évaluation (10) présente une structure à deux canaux.

18. Dispositif selon la revendication 17, **caractérisé en ce que** l'unité d'évaluation (10) présente deux unités de calcul (11, 11') qui se contrôlent mutuellement.

19. Dispositif selon une des revendications 1 à 18, **caractérisé en ce que** l'équipement de travail est formé par une machine dans laquelle une première partie de machine effectue des mouvements de travail vers une deuxième partie de machine.

20. Dispositif selon la revendication 19, **caractérisé en ce que** la machine est formée par une presse plieuse (15), la première partie de machine étant formée par un outil supérieur (16) qui peut être déplacé par rapport à un outil inférieur (17) stationnaire formant la deuxième partie de machine.

**21.** Dispositif selon la revendication 20, **caractérisé en ce que** la zone de couverture (2) est limitée par la face supérieure de l'outil inférieur (17).

**22.** Dispositif selon une des revendications 20 ou 21, **caractérisé en ce que** celui-ci est disposé de manière stationnaire sur la presse plieuse (15).

**23.** Dispositif selon une des revendications 20 ou 21, **caractérisé en ce que** celui-ci est disposé sur l'outil supérieur (16).

# Fig. 1

# Fig. 2

**Fig. 3**

Sendelichtimpulse

$T$

Integrationszeitintervalle

$\Delta T$

Empfangslichtimpulse

$t_a$ $t_b$

integriertes
Ausgangssignal $U$

$U_1$ $U_2$

$t_1$ $t_2$

EP 1 548 351 B1

# Fig. 4a

**Fig. 4b**

15

1

16

2

17

**Fig. 4c**

15

1

16

2

18

17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19717299 A1
- EP 1065522 A
- EP 1089030 A